# FASCICULE DE BREVET EUROPEEN

(11) **EP 4 332 991 B1**
(45) Date de publication et mention de la délivrance du brevet: **21.05.2025**
(21) Numéro de dépôt: 23189246.4
(22) Date de dépôt: 02.08.2023
(51) Int. Cl.: G21C 19/42, C22B 3/06, C22B 3/38, C22B 60/02, C22B 60/04, G21C 19/46

(54) **PROCÉDÉ DE DÉSEXTRACTION D'URANIUM(VI) ET D'UN ACTINIDE(IV) D'UNE SOLUTION ORGANIQUE PAR PRÉCIPITATION OXALIQUE**
VERFAHREN ZUR ENTFERNUNG VON URAN(VI) UND EINEM AKTINID(IV) AUS EINER ORGANISCHEN LÖSUNG DURCH OXALSÄUREFÄLLUNG
PROCESS FOR THE REMOVAL OF URANIUM (VI) AND AN ACTINIDE (IV) FROM AN ORGANIC SOLUTION BY OXALIC PRECIPITATION

(30) Priorité: 02.09.2022 FR 2208845
(43) Date de publication de la demande: 06.03.2024
(73) Titulaire: Commissariat à l'Energie Atomique et aux Energies Alternatives, 75015 Paris (FR); Centre National de la Recherche Scientifique, 75794 Paris Cedex 16 (FR); UNIVERSITE DE MONTPELLIER, 34090 Montpellier (FR); Ecole Nationale Supérieure de Chimie de Montpellier, 34090 Montpellier (FR)
(72) Inventeur: MEYER, Daniel, 30150 SAINT-GENIES-DE-COMOLAS (FR); BERTRAND, Muriel, 30700 SAINT-SIFFRET (FR); BOURGEOIS, Damien, 30390 ARAMON (FR); DURAIN, Julie, 30130 PONT-SAINT-ESPRIT (FR)
(74) Mandataire: Brevalex

(56) Documents cités:
- EP-A1- 0 251 399
- WO-A1-2007/135178
- FR-A1- 2 523 156
- GB-A- 834 531
- US-A- 4 574 072

## Description

### Domaine technique

L'invention se rapporte au domaine du traitement de combustibles nucléaires usés.

Plus spécifiquement, elle se rapporte à un procédé permettant de désextraire, d'une solution organique comprenant de l'uranium(VI) et un actinide(IV), la totalité ou quasi-totalité de l'actinide(IV), conjointement avec une fraction de l'uranium(VI), dans un rapport U(VI)/actinide(IV) contrôlé et ce, par précipitation oxalique.

Elle se rapporte également à un procédé de traitement d'une solution aqueuse issue de la dissolution d'un combustible nucléaire usé dans de l'acide nitrique, dans lequel est mis en œuvre ce procédé de désextraction.

### État de la technique antérieure

Aujourd'hui, le fonctionnement des réacteurs du parc électronucléaire français est fondé sur l'utilisation d'un combustible composé d'oxyde d'uranium naturel, enrichi en isotope 235, et pour certains, d'un combustible composé d'un oxyde mixte d'uranium et de plutonium, dit combustible MOX (de « **M**ixed **OX**ide Fuel »).

Le combustible MOX permet le recyclage du plutonium issu du traitement de combustibles nucléaires usés.

Le traitement des combustibles nucléaires usés est actuellement réalisé par le procédé PUREX qui consiste schématiquement à :
- dissoudre les combustibles dans de l'acide nitrique pour mettre en solution les éléments qu'ils renferment (uranium, plutonium, actinides mineurs, produits de fission, produits de corrosion) ;
- séparer par extraction liquide-liquide les éléments valorisables, c'est-à-dire l'uranium(VI) et le plutonium(IV), des autres éléments qui sont, eux, destinés à constituer des déchets ultimes ;
- effectuer une partition de l'uranium(VI) et du plutonium(IV) en deux flux aqueux dont l'un ne contient que de l'uranium tandis que l'autre ne contient que du plutonium ;
- purifier séparément l'uranium(VI) et le plutonium(IV) après leur partition, également par extraction liquide-liquide ; et
- convertir le plutonium(IV) purifié en une poudre d'oxyde de plutonium, PuO₂, par précipitation oxalique suivie d'une calcination du précipité ainsi obtenu.

La fabrication du combustible MOX fait, elle, appel au procédé MIMAS qui consiste schématiquement à :
- broyer ensemble deux poudres, respectivement d'oxyde d'uranium, UO₂, et de PuO₂, pour obtenir un mélange micronisé et homogène de ces poudres ;
- tamiser puis diluer le mélange ainsi obtenu avec une poudre d'UO₂ pour ajuster la teneur en plutonium du mélange à celle requise pour le combustible ;
- presser le mélange sous de forme de pastilles et fritter les pastilles à haute température ; et
- rectifier les pastilles pour ajuster leurs dimensions aux spécifications.

L'ensemble des opérations des procédés PUREX et MIMAS est décrit de façon détaillée dans la monographie de la Direction de l'énergie nucléaire du CEA intitulée « Le traitement-recyclage du combustible nucléaire usé - La séparation des actinides - Application à la gestion des déchets » et publiée en 2008 (Éditions Le Moniteur, ISBN 978-2-281-11376-1), ci-après référence **[1].**

Une évolution importante du procédé PUREX, dénommée procédé COEX^{™}, a été proposée dans la demande internationale PCT WO-A-2007/135178, ci-après référence **[2].**

En effet, tout en assurant une récupération et une purification de l'uranium et du plutonium comparables à celles obtenues dans le procédé PUREX, le procédé COEX^{™} permet, après des étapes de dissolution et de séparation analogues à celles du procédé PUREX, d'effectuer une partition de l'uranium(VI) et du plutonium(IV) telle qu'elle conduit à l'obtention d'un premier flux aqueux qui comprend un mélange d'uranium et de plutonium, et d'un deuxième flux aqueux qui ne comprend que de l'uranium. Une fois l'uranium et le plutonium du premier flux aqueux purifiés par extraction liquide-liquide, ce flux permet d'alimenter un atelier dit de « *coconversion* » dont la fonction est de préparer, par coprécipitation oxalique de l'uranium et du plutonium et calcination du précipité obtenu, une poudre d'un oxyde mixte (U,Pu)O₂ directement utilisable pour la fabrication d'un combustible MOX.

Que ce soit dans le procédé PUREX comme dans le procédé COEX^{™}, la (co)précipitation oxalique est réalisée en solution aqueuse avec, dans le cas du procédé COEX^{™}, une réduction préalable de l'uranium(VI) et du plutonium(IV), respectivement à l'état d'oxydation IV et à l'état d'oxydation III.

Dans la perspective du développement de nouvelles usines de traitement-recyclage de combustibles nucléaires usés, il serait souhaitable de disposer d'un procédé permettant de réduire au mieux le nombre d'opérations devant être effectuées entre la dissolution des combustibles dans l'acide nitrique et l'obtention d'une poudre d'un oxyde mixte (U,Pu)O₂ directement utilisable pour la fabrication d'un combustible MOX.

Il est connu de désextraire des éléments métalliques d'une solution organique en précipitant ces éléments par mise en contact de la solution organique avec une solution aqueuse comprenant un agent précipitant. Ce type de désextraction est dit « désextraction par précipitation » ou « désextraction précipitante » (ou encore « precipitation-stripping » en anglais).

Notamment, il est connu de désextraire du plutonium(IV), seul ou en mélange avec de l'uranium(VI) ou de l'américium(III), d'une solution organique par précipitation oxalique.

Ainsi, il a été décrit, dans le brevet britannique GB-B-834,531, ci-après référence **[3],** un procédé consistant à mettre en contact une phase organique comprenant du phosphate de tri-n-butyle (ou TBP, qui est l'extractant utilisé dans les procédés PUREX et COEX^{™}) à 20 % (v/v) dans du kérosène, préalablement chargée en plutonium(IV) à hauteur de 2 g/L, avec une phase aqueuse comprenant de 1,5 mol/L à 3 mol/L d'acide nitrique et 0,25 mol/L d'acide oxalique et ce, dans un rapport volumique Organique/Aqueux (ou rapport O/A) de 4. Après 30 minutes d'agitation, la phase aqueuse contenant l'oxalate de plutonium est soutirée et soumise à filtration pour récupérer cet oxalate. Parallèlement, la phase organique est lavée avec de l'eau, dans un rapport O/A de 4, pour éliminer de cette phase l'oxalate de plutonium susceptible d'être dissous ou en suspension dans ladite phase et pour le combiner, après filtration, à l'oxalate de plutonium précédemment récupéré. Selon les auteurs de cette référence, le plutonium(IV) précipiterait à 99,4 %.

Plus récemment, il a été décrit, dans la demande de brevet européen EP-A-0 251 399, ci-après référence **[4],** un procédé de récupération par précipitation oxalique du plutonium(IV) à partir d'une phase organique comprenant du TBP à 15 %, 20 % ou 30 % (v/v) dans du n-dodécane et dans laquelle le plutonium est présent seul ou conjointement avec de l'uranium(VI) ou de l'américium(III). Dans ce procédé, la phase organique est tout d'abord diluée pour amener sa concentration en plutonium en-dessous de 10 g/L et, dans le cas où elle comprend aussi de l'uranium, sa concentration totale en plutonium et uranium en-dessous de 45 g/L, puis elle est mise en contact avec une solution aqueuse comprenant 1 mol/L d'acide nitrique et 0,5 mol/L d'acide oxalique. Selon les auteurs de cette référence, la précipitation du plutonium(IV) sous forme d'oxalate serait quantitative ou quasi quantitative. Lorsque de l'uranium est présent dans la phase organique, une quantité plus ou moins importante d'oxalate d'uranium est également retrouvée dans le précipité.

Il se trouve que, dans le cadre de leurs travaux, les inventeurs ont constaté qu'à rebours de l'enseignement de la référence **[4],** qui insiste sur la nécessité de diluer préalablement la phase organique pour amener sa teneur totale en plutonium et uranium en-dessous de 45 g/L si l'on veut obtenir une précipitation effective du plutonium, il est tout à fait possible de faire précipiter de manière très satisfaisante un actinide(IV), tel que le plutonium ou le thorium, avec une fraction choisie d'uranium lorsque ceux-ci sont présents dans une phase organique à une teneur totale en actinide(IV) et uranium(VI) supérieure à 45 g/L et ce, sans procéder à une quelconque dilution préalable de cette phase organique, sous réserve de choisir convenablement les concentrations en acide nitrique et en acide oxalique de la solution aqueuse.

Ils ont également constaté que, si les concentrations en acide nitrique et en acide oxalique de la solution aqueuse ne sont pas convenablement choisies, alors il se forme dans le précipité une impureté constituée d'uranium, d'oxalate et de TBP qui rend rédhibitoire l'utilisation de ce précipité pour la préparation d'un oxyde mixte (U,Pu)O₂ destiné à la fabrication d'un combustible MOX. Ceci n'est nullement évoqué dans la référence **[4].**

Ils ont en outre constaté qu'en choisissant convenablement les concentrations en acide nitrique et en acide oxalique, il est possible d'obtenir une précipitation de la totalité ou quasi-totalité de l'actinide(IV), conjointement avec une fraction de l'uranium(VI), dans un rapport massique U(VI)/Pu(IV) parfaitement contrôlé, ce qui, là également, n'est nullement évoqué dans la référence **[4].**

Et c'est sur ces constations expérimentales qu'est basée l'invention.

### Exposé de l'invention

L'invention a donc pour objet un procédé pour désextraire de l'uranium(VI) et un actinide(IV) d'une solution organique dans laquelle l'uranium(VI) et l'actinide(IV) sont présents sous la forme de nitrates à des concentrations telles que la concentration du nitrate d'uranium(VI) est plus élevée que la concentration du nitrate d'actinide(IV), et la somme des concentrations des nitrates d'uranium(VI) et d'actinide(IV) est supérieure ou égale à 55 g/L, la solution organique comprenant du TBP dans un diluant organique, lequel procédé comprend :
- au moins une mise en contact de la solution organique avec une solution aqueuse comprenant de 2 mol/L à 6 mol/L d'acide nitrique et de l'acide oxalique à une concentration supérieure ou égale à 18 g/L, dans un rapport O/A supérieur ou égal à 1, la concentration de l'acide oxalique dans la solution aqueuse et le rapport O/A étant choisis de sorte que l'acide oxalique soit en défaut par rapport aux conditions stœchiométriques d'une précipitation complète de l'uranium(VI) et de l'actinide(IV), moyennant quoi on obtient un précipité qui comprend l'actinide(IV) sous forme d'oxalate et de l'uranium(VI) sous forme d'oxalate dans un rapport massique U(VI)/actinide(IV) compris entre 0,5 et 5 ; puis
- une séparation du précipité des solutions organique et aqueuse.

Dans ce qui précède et ce qui suit, les termes « solution aqueuse » et « phase aqueuse » sont équivalents et interchangeables tout comme le sont les termes « solution organique » et « phase organique ».

Par ailleurs, on entend par « diluant organique », tout hydrocarbure apolaire ou mélange d'hydrocarbures apolaires, aliphatique(s) et/ou aromatique(s), dont l'utilisation a été proposée pour mettre le TBP en solution. À titre d'exemples d'un tel diluant, on peut notamment citer le n-dodécane, le tétrapropylène hydrogéné (ou TPH), le kérosène et les diluants isoparaffiniques tels que ceux qui sont commercialisés par TotalEnergies sous les références Isane^{™} IP-185 et Isane^{™} IP-175.

Conformément à l'invention, la somme des concentrations des nitrates d'uranium(VI) et d'actinide(IV) dans la solution organique est, de préférence, supérieure ou égale à 70 g/L.

Par ailleurs, cette solution organique comprend, de préférence, de 25 % à 35 % (v/v) et plus préférentiellement 30 % (v/v) de phosphate de tri-*n*-butyle.

La solution aqueuse présente, elle, de préférence une concentration en acide oxalique supérieure ou égale à 20 g/L et, mieux encore, supérieure ou égale à 22 g/L.

Quant au rapport O/A, il est de préférence supérieur ou égal à 1,5.

Conformément à l'invention, on préfère que le précipité comprenant l'actinide(IV) sous forme d'oxalate et de l'uranium(VI) sous forme d'oxalate présente un rapport massique U(VI)/actinide(IV) compris entre 1 et 3 et, de préférence, égal à 1.

Pour ce faire, la solution aqueuse présente préférentiellement une concentration molaire en acide oxalique de 5 fois à 10 fois plus élevée que la concentration molaire de l'actinide(IV), étant entendu qu'un homme du métier, cherchant à obtenir un précipité présentant un rapport massique U(VI)/actinide(IV) donné, saura parfaitement ajuster, en fonction des autres paramètres opératoires (concentration en acide nitrique notamment), la concentration molaire en acide oxalique devant être utilisée pour atteindre ce rapport massique.

Conformément à l'invention, la séparation du précipité des solutions organique et aqueuse peut être réalisée en une seule étape par filtration. À titre d'exemple non-limitatif, la filtration peut se faire en continu en utilisant un filtre à tambour, ou en discontinu en utilisant un filtre-presse. Le filtrat récupéré est constitué d'un mélange des phases aqueuse et organique résiduelles qui peuvent ensuite être séparées et traitées indépendamment selon les techniques classiques utilisées dans les procédés de séparation par extraction liquide-liquide.

Avantageusement, le procédé comprend de plus, une fois le précipité séparé des solutions organique et aqueuse, un ou plusieurs lavages de ce précipité que l'on réalise soit avec une solution aqueuse comprenant de l'acide nitrique, soit avec une solution organique comprenant le diluant, chaque lavage étant suivi d'une séparation du précipité de la solution aqueuse ou organique de lavage. De préférence, on effectue un seul lavage avec une solution aqueuse d'acide nitrique.

L'actinide(IV) peut être le plutonium(IV) ou le thorium(IV), préférence étant donnée au plutonium(IV).

Le procédé de désextraction qui vient d'être décrit trouve un intérêt tout particulier pour le traitement d'une solution organique comprenant un mélange composé de 75 % à 95 % massiques d'uranium(VI) et de 5 % à 25 % massiques d'un actinide(IV) et, notamment, de plutonium(IV).

Il peut avantageusement être mis à profit pour simplifier le traitement d'une solution aqueuse issue de la dissolution d'un combustible nucléaire usé dans de l'acide nitrique.

Aussi, l'invention a-t-elle également pour objet un procédé de traitement d'une solution aqueuse issue de la dissolution d'un combustible nucléaire usé dans de l'acide nitrique, la solution aqueuse comprenant au moins de l'uranium(VI) et un actinide(IV), qui comprend aux moins les étapes suivantes :
a) une co-extraction de l'uranium(VI) et de l'actinide(IV) de la solution aqueuse, la co-extraction comprenant au moins une mise en contact de la solution aqueuse avec une solution organique comprenant du phosphate de tri-*n*-butyle en solution dans un diluant organique, puis une séparation de la solution aqueuse de la solution organique ;
b) une désextraction de l'actinide(IV) et d'une fraction de l'uranium(VI) de la solution organique obtenue à l'issue de l'étape a), la désextraction comprenant une mise en œuvre d'un procédé de désextraction tel que précédemment décrit ; et
c) une désextraction de l'uranium(VI) n'ayant pas été désextrait à l'étape b) de la solution organique, la désextraction comprenant au moins une mise en contact de la solution organique obtenue à l'issue de l'étape b) avec une solution aqueuse comprenant de 0,005 mol/L à 0,05 mol/L d'acide nitrique, puis une séparation de la solution organique de la solution aqueuse.

Ce procédé de traitement peut comprendre de plus, entre les étapes a) et b), un lavage de la solution organique obtenue à l'issue de l'étape a), le lavage comprenant au moins une mise en contact de la solution organique obtenue à l'issue de l'étape a) avec une solution aqueuse comprenant de 0,5 mol/L à 6 mol/L, de préférence de 4 mol/L à 6 mol/L, d'acide nitrique, puis une séparation de la solution organique de la solution aqueuse.

Également, il peut comprendre de plus une régénération de la solution organique obtenue à l'issue de l'étape c) en vue de sa réutilisation à l'étape a), cette régénération comprenant de préférence au moins un lavage de la solution organique obtenue à l'issue de l'étape c) avec une solution aqueuse basique, suivi d'au moins un lavage de la solution organique avec une solution aqueuse d'acide nitrique.

En outre, il peut comprendre de plus une conversion du précipité obtenu à l'issue de l'étape b) en un oxyde mixte d'uranium(VI) et d'actinide(IV), cette conversion comprenant de préférence une calcination du précipité à une température allant de 600 °C à 800 °C sous une atmosphère oxydante, typiquement de l'air.

Dans le cadre du procédé de traitement décrit ci-avant, l'actinide(IV) est de préférence le plutonium(IV).

D'autres caractéristiques et avantages de l'invention ressortiront du complément de description qui suit et qui se réfère aux figures annexées.

Il va de soi toutefois que ce complément de description n'est donné qu'à titre d'illustration de l'objet de l'invention et ne doit en aucun cas être interprété comme une limitation de cet objet.

### Brève description des figures

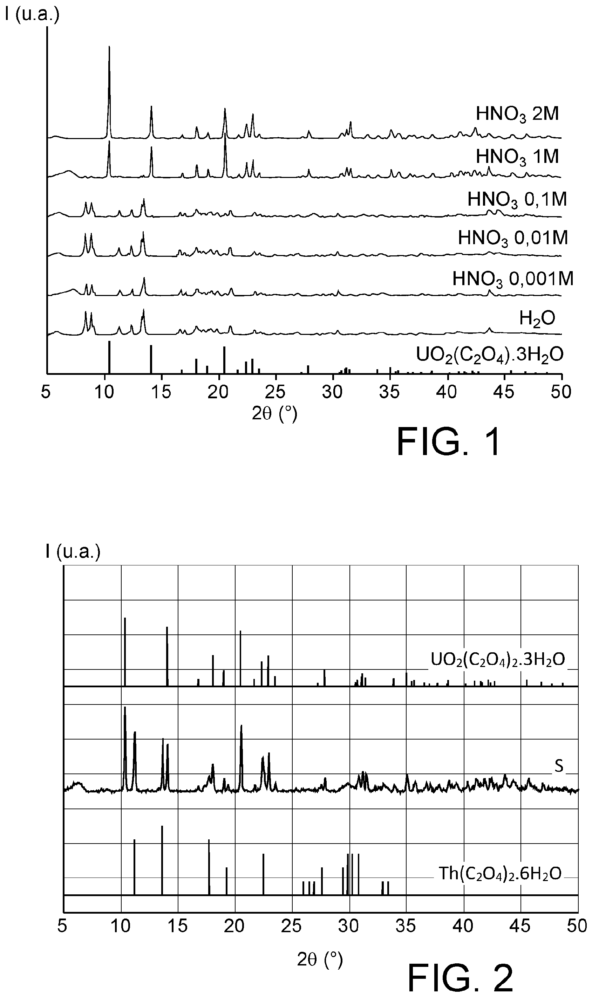

La figure 1 illustre les diffractogrammes X sur poudre des solides obtenus par désextraction de l'uranium(VI) d'une solution organique comprenant 1 mol/L de TBP dans du n-dodécane au moyen d'une solution aqueuse comprenant 0,20 mol/L d'acide oxalique et de 0 mol/L à 2 mol/L d'acide nitrique ; à titre de référence, est également représenté sur cette figure le diffractogramme X sur poudre de l'oxalate d'uranyle trihydraté, UO₂(C₂O₄)₂.3H₂O.
La figure 2 illustre le diffractogramme X sur poudre, noté 1, du solide obtenu par désextraction de l'uranium(VI) et du thorium(IV) d'une solution organique comprenant 1 mol/L de TBP dans du *n*-dodécane au moyen d'une solution aqueuse comprenant 0,24 mol/L d'acide oxalique et 2 mol/L d'acide nitrique ; à titre de références, sont également représentés sur cette figure les diffractogrammes X sur poudre de l'oxalate d'uranyle trihydraté, UO₂(C₂O₄)₂.3H₂O, et de l'oxalate de thorium hexahydraté, Th(C₂O₄)₂.6H₂O.

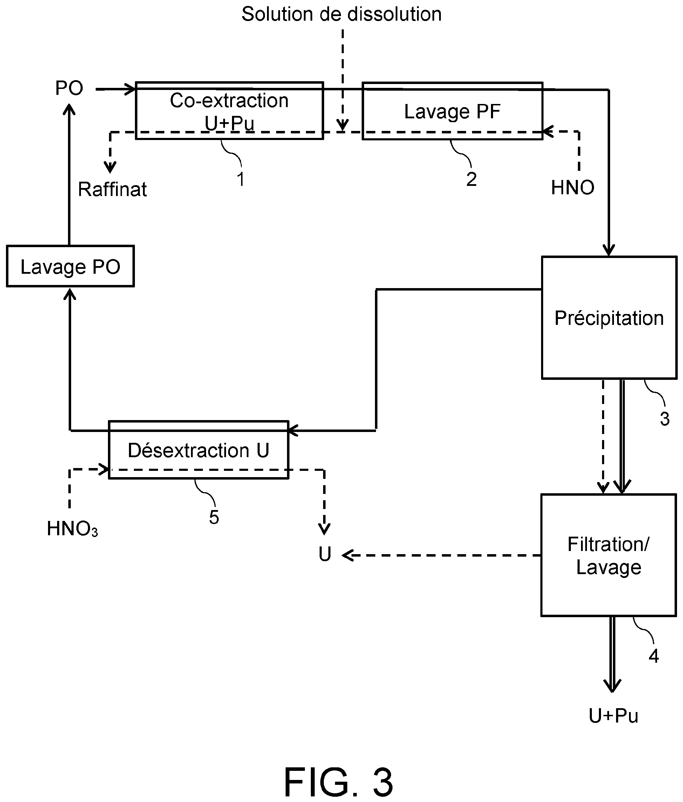

La figure 3 illustre un schéma de principe d'un mode de mise en œuvre du procédé de traitement d'une solution aqueuse issue de la dissolution d'un combustible nucléaire usé dans l'acide nitrique conforme à l'invention ; sur cette figure, les rectangles notés 1, 2 et 5 représentent des extracteurs multi-étagés tels que ceux classiquement utilisés dans le traitement des combustibles nucléaires usés (mélangeurs-décanteurs, colonnes pulsées ou extracteurs centrifuges) ; par ailleurs, les phases organiques sont symbolisées par un simple trait plein ; les phases aqueuses sont symbolisées par un simple trait en pointillés tandis que les phases solides sont symbolisées par un double trait plein.

### Exposé détaillé de modes de mise en œuvre particuliers

### I - Validation expérimentale du procédé de désextraction de l'invention :

Les essais de désextraction par précipitation oxalique qui sont rapportés ci-après sont réalisés en utilisant :
- comme solutions organiques ; des solutions comprenant soit du nitrate d'uranyle (essai 1) soit un mélange de nitrate d'uranyle et de nitrate de thorium (essai 2) dans un solvant composé de TBP (pur à 97 %), à une concentration de 1 mol/L, dans le *n-*dodécane (pur à plus de 99 %) ; et
- comme solutions aqueuses : des solutions comprenant de l'acide oxalique et de l'acide nitrique dans de l'eau.

Pour la préparation des solutions organiques, des cristaux de nitrate d'uranyle hexahydraté, UO₂(NO₃)₂.6H₂O, et, dans le cas de l'essai 2, de nitrate de thorium pentahydraté, Th(NO₃)₄.5H₂O, sont dissous dans de l'acide nitrique 6M. Puis, le(s) nitrate(s) d'actinide(s) est (sont) extrait(s) de la solution aqueuse ainsi obtenue au moyen du solvant TBP 1M/n-dodécane. Pour ce faire, cette solution aqueuse est mise en contact dans un tube de 5 mL avec le solvant pré-équilibré à température ambiante (21°C + 2°C), dans un rapport O/A de 1 ; le tube est placé dans un agitateur orbital thermostaté à 20 °C, à une vitesse de 1 000 tr/min, pendant 10 minutes. Après décantation par gravité, les phases aqueuse et organique sont séparées l'une de l'autre par prélèvement de la phase organique.

Pour la préparation des solutions aqueuses comprenant de l'acide oxalique et de l'acide nitrique, une poudre d'acide oxalique dihydraté, C₂O₄H₂.2H₂O, pur à 99,5 %, est dissoute dans une solution aqueuse d'HNO₃.

Pour chaque essai de précipitation, 250 µL d'une solution organique sont additionnés, goutte à goutte, à 250 µL d'une solution aqueuse dans un pilulier en verre de 4 mL sous agitation magnétique de 500 tr/min, puis le pilulier est placé dans un agitateur orbital thermostaté à 21 °C, à une vitesse de 1 000 tr/min, pendant 1 heure.

Après quoi, le contenu du pilulier est aspiré et transvasé dans un tube que l'on soumet à une centrifugation de 12 500 tr/min pendant 5 minutes pour séparer la phase solide en suspension des phases liquides, respectivement organique et aqueuse.

Les phases organique et aqueuse obtenus à l'issue de cette centrifugation sont prélevées pour ne laisser que le solide s'étant formé dans le tube.

Ce solide est lavé par ajout de 250 µL d'éthanol dans le tube, trituration à l'aide de la pointe d'une pipette, agitation au vortex pendant quelques secondes, centrifugation de 12 500 tr/min pendant 5 minutes et retrait de l'éthanol. Le tube est placé dans une étuve chauffée à 40 °C pendant une nuit pour sécher le solide.

Le solide est ensuite caractérisé par diffraction des rayons X sur poudre au moyen d'un diffractomètre Bruker D8 Advance, monté selon la géométrie Bragg-Brentano et équipé d'une source au cuivre (40 kV, 40 mA, λ = 1,5418 Å) et d'un détecteur rapide 1D LynxEye.

Quant aux phases aqueuse et organique, leur teneur en uranium et, dans le cas de l'essai 2, leur teneur en thorium est (sont) déterminée(s) par spectrométrie d'émission atomique par plasma à couplage inductif (ou ICP-AES).

Pour ce faire, la phase aqueuse est pipetée et diluée dans une solution matrice qui est un mélange HNO₃/HCl 2% (90/10, v/v). La dilution typique est d'un facteur 1000 obtenue par dilution en cascade : 50 µL de solution sont ajoutés à 4,95 mL de solution matrice, puis la solution ainsi obtenue est de nouveau diluée en ajoutant 500 µL de cette solution à 4,5 mL de solution matrice.

La phase organique est, quant à elle, soumise à une désextraction par mise en contact avec une solution aqueuse comprenant 0,01 mol/L d'HNO₃, dans un rapport A/O=10 (i.e. 50 µL de phase organique pour 500 µL de solution aqueuse), et agitation sur agitateur orbital (1 000 tr/min) à 21 °C. Après décantation des deux phases par gravité, une fraction de la phase aqueuse est prélevée pour être diluée de 100 à 1000 fois dans la solution matrice HNO₃/HCl 2% (90/10, v/v). La dilution totale des actinides qui étaient initialement présents en phase organique est donc d'un facteur 1000 à 10 000 lors de l'analyse par ICP-AES.

Les longueurs d'onde (nm) utilisées pour la quantification de l'uranium et du thorium par ICP-AES sont les suivantes :

| | | | | |
|---|---|---|---|---|
| U: | 279,394 | 367,007 | 385,958 | 409,014 ; |
| Th: | 274,716 | 283,231 | 283,730 | 401,913. |

### I.1 - Essai 1 :

Cet essai de désextraction par précipitation oxalique est réalisé en utilisant :
- une solution organique comprenant 0,268 mol/L (i.e. 64 g/L) de nitrate d'uranyle et 0,325 mol/L d'acide nitrique, préalablement obtenue comme décrit ci-avant à partir d'une solution aqueuse comprenant 0,326 mol/L (i.e. 77 g/L) de nitrate d'uranyle et 6 mol/L d'acide nitrique ; et
- des solutions aqueuses comprenant toutes 0,20 mol/L (i.e. 18 g/L) d'acide oxalique, une de ces solutions étant exempte d'acide nitrique et les autres comprenant 0,001 mol/L, 0,01 mol/L, 0,1 mol/L, 1 mol/L ou 2 mol/L d'acide nitrique.

Les diffractogrammes X sur poudre des solides obtenus à l'issue de cet essai sont présentés sur la figure 1, conjointement avec le diffractogramme X sur poudre de l'oxalate d'uranyle trihydraté, UO₂(C₂O₄)₂.3H₂O servant de référence.

Comme le montre cette figure, pour une concentration d'acide nitrique inférieure à 1 mol/L, on observe majoritairement une impureté composée d'un mélange d'uranium, d'oxalate et de TBP, qui est caractérisée par des pics à 8,3 , 8,8°, 11,2°, 12,4° et 13,4° sur les diffractogrammes. Pour 1 mol/L d'acide nitrique, l'oxalate d'uranyle est le composé cristallin qui est largement majoritaire tandis que, pour 2 mol/L d'acide nitrique, il est le seul composé cristallin détecté.

### 1.2 - Essai 2 :

Cet essai de désextraction par précipitation oxalique est réalisé en utilisant :
- une solution organique comprenant 0,250 mol/L (i.e. 59,5 g/L) de nitrate d'uranyle, 0,033 mol/L (i.e. 7,5 g/L) de nitrate de thorium et 0,352 mol/L d'acide nitrique, préalablement obtenue comme décrit ci-avant à partir d'une solution aqueuse comprenant 0,326 mol/L (i.e. 77 g/L) de nitrate d'uranyle, 0,18 mol/L (i.e. 42 g/L) de nitrate de thorium et 6 mol/L d'acide nitrique ; et
- une solution aqueuse comprenant 0,24 mol/L (i.e. 22 g/L) d'acide oxalique et 2 mol/L d'acide nitrique.

Le diffractogramme X sur poudre du solide obtenu à l'issue de cet essai est présenté sur la figure 2, où il est noté S, conjointement avec les diffractogrammes X sur poudre de l'oxalate d'uranyle trihydraté, UO₂(C₂O₄)₂.3H₂O, et de l'oxalate de thorium hexahydraté, Th(C₂O₄)₂.6H₂O, servant de références.

Comme le montre cette figure, les seuls composés cristallins présents dans le solide sont l'oxalate d'uranyle et l'oxalate de thorium.

Par ailleurs, l'analyse par ICP-AES des surnageants organique et aqueux ne permet pas de détecter de thorium dans ces surnageants, ce qui signifie que tout le thorium est présent dans le solide.

Cette analyse montre de plus que le rendement de précipitation de l'uranium est de 33 % si bien que le rapport massique U/Th dans le solide est de 2,5.

### II - Schéma de principe d'un mode de mise en œuvre du procédé de traitement de l'invention :

On se réfère à la figure 3 qui représente un schéma de principe d'un mode de mise en œuvre du procédé de traitement d'une solution aqueuse de dissolution d'un combustible nucléaire usé dans de l'acide nitrique conforme à l'invention.

Comme le montre cette figure, le procédé comprend 6 étapes.

La première de ces étapes, notée « Co-extraction U+Pu » sur la figure 3, vise à extraire conjointement l'uranium et le plutonium, le premier au degré d'oxydation +VI et le second au degré d'oxydation +IV, de la solution aqueuse nitrique de dissolution d'un combustible nucléaire usé.

Une telle solution comprend typiquement de 3 mol/L à 6 mol/L d'HNO₃, de l'uranium, du plutonium, des actinides mineurs (américium et curium), des produits de fission (La, Ce, Pr, Nd, Sm, Eu, Gd, Mo, Zr, Ru, Tc, Rh, Pd, Y, Cs, ...) ainsi que quelques produits de corrosion comme le fer.

Comme connu en soi, l'étape « Co-extraction U+Pu » est réalisée en faisant circuler, dans l'extracteur 1, la solution de dissolution à contre-courant d'une phase organique, notée « PO » sur la figure 3, qui comprend du TBP, avantageusement à hauteur de 30 % (v/v), dans un diluant organique, par exemple du *n*-dodécane.

Comme également connu en soi, la deuxième étape du procédé, notée « Lavage PF » sur la figure 3, vise à désextraire de la phase organique issue de l'étape « Co-extraction U+Pu » la fraction des produits de fission susceptible d'avoir été extraite de la solution de dissolution, conjointement avec l'uranium et le plutonium.

Pour ce faire, la phase organique sortant de l'extracteur 1 est mise à circuler, dans l'extracteur 2, à contre-courant d'une solution aqueuse nitrique dont la concentration peut aller de 0,5 mol/L à 6 mol/L d'HNO₃ mais est, de préférence, de 4 mol/L à 6 mol/L d'HNO₃ de sorte à faciliter la désextraction du ruthénium et du technétium.

La troisième étape du procédé, notée « Précipitation » sur la figure 3, vise à désextraire de la phase organique issue de l'étape « Lavage PF » la totalité du plutonium présent dans cette phase, conjointement avec une fraction de l'uranium, par précipitation oxalique.

Pour ce faire, la phase organique sortant de l'extracteur 2, est dirigée vers une unité de précipitation, notée 3, où elle est mise en contact avec une solution aqueuse comprenant de 2 mol/L à 6 mol/L d'HNO₃ et de l'acide oxalique à une concentration au moins égale à 20 g/L, dans un rapport O/A au moins égal à 1 et, de préférence, au moins égal à 1,5, la concentration de l'acide oxalique dans la solution aqueuse et le rapport O/A étant toutefois choisis de sorte que l'acide oxalique soit en défaut par rapport aux conditions stœchiométriques d'une précipitation complète de l'uranium et du plutonium.

Ainsi, par exemple, pour une phase organique présentant une teneur U+Pu de 72 g/L avec un rapport massique U/Pu de l'ordre de 8,2, cette phase organique est avantageusement mise en contact avec une solution aqueuse comprenant 2 mol/L d'HNO₃ et 0,24 mol/L (i.e. 22 g/L) d'acide oxalique dans un rapport O/A de 1.

Au terme de l'étape « Précipitation », sont obtenues trois phases, à savoir :
- une phase solide qui renferme la totalité du plutonium et une fraction de l'uranium qui étaient présents dans la phase organique issue de l'étape « Lavage PF »,
- une phase aqueuse qui comprend de l'uranium mais est exempte de plutonium, et
- une phase organique qui, comme la phase aqueuse, comprend de l'uranium mais est exempte de plutonium.

À titre d'exemple, l'utilisation des conditions opératoires mentionnées ci-avant conduit à d'obtention d'une phase solide, d'une phase aqueuse et d'une phase organique qui comprennent respectivement de l'ordre de 33 %, 15,60 % et 51,40 % massiques de l'uranium qui était présent la phase organique issue de l'étape « Lavage PF ». Le rapport massique U/Pu dans la phase solide est de 2,7.

Les phases solide et aqueuse issues de l'étape « Précipitation » sont dirigées vers une unité, notée 4 sur la figure 3, dévolue à la quatrième étape du procédé, notée « Filtration/Lavage » sur cette figure, qui vise à séparer ces phases l'une de l'autre par filtration et à laver, de préférence une fois, la phase solide avec une solution aqueuse nitrique comprenant au plus 2 mol/L d'acide nitrique, le lavage étant suivi d'une filtration.

Parallèlement, la phase organique issue de l'étape « Précipitation » est dirigée vers l'extracteur 3 dans lequel est réalisée la cinquième étape du procédé, notée « Désextraction U » sur la figure 3, qui vise à désextraire de cette phase organique l'uranium qu'elle comprend.

Pour ce faire, la phase organique sortant de l'unité 3 est mise à circuler, dans l'extracteur 5, à contre-courant d'une solution aqueuse nitrique dont la concentration en HNO₃ peut aller de 0,005 mol/L à 0,05 mol/L.

Au terme de ces cinq étapes, sont obtenus :
- un raffinat qui correspond à la phase aqueuse sortant de l'extracteur 1 et qui comprend des produits de fission ainsi que de l'américium et du curium ;
- une phase solide composée d'oxalate de plutonium et d'oxalate d'uranium et qui est dirigée vers un atelier dédié à sa conversion en un oxyde mixte (U,Pu)O₂, par exemple par calcination à une température allant de 600 °C à 800°C sous atmosphère oxydante ;
- deux phases aqueuses qui correspondent aux phases aqueuses sortant respectivement de l'unité 4 et de l'extracteur 5, qui comprennent toutes les deux du nitrate d'uranyle et qui sont dirigées vers une unité de stockage ou vers un atelier dédié à la conversion de ce nitrate d'uranyle en oxyde d'uranium, UO₂, par exemple par précipitation sous forme de peroxyde d'uranium, UO₄, suivie d'une calcination du précipité et d'une réduction dans l'hydrogène ; et
- une phase organique qui correspond à la phase organique sortant de l'extracteur 5, qui ne comprend plus d'uranium mais qui peut contenir certaines impuretés et produits de dégradation (formés par hydrolyse et radiolyse) du TBP s'étant formés au cours des étapes précédentes.

Aussi, la sixième étape du procédé, notée « Lavage PO » sur la figure 3, vise-t-elle à régénérer cette phase organique en la soumettant à un ou plusieurs lavages avec une solution aqueuse basique, par exemple un premier lavage avec une solution aqueuse à 0,3 mol/L de carbonate de sodium, suivi d'un deuxième lavage avec une solution aqueuse à 0,1 mol/L d'hydroxyde de sodium, puis à un ou plusieurs lavages avec une solution aqueuse d'acide nitrique permettant de la réacidifier, par exemple une solution aqueuse comprenant 2 mol/L d'HNO₃, chaque lavage étant réalisé en faisant circuler ladite phase organique, dans un extracteur, à contre-courant de la solution aqueuse de lavage.

Comme visible sur la figure 3, la phase organique ainsi régénérée peut alors être renvoyée vers l'extracteur 1 pour sa réutilisation dans le procédé de traitement.

### Références citées

**[1]** « Le traitement-recyclage du combustible nucléaire usé - La séparation des actinides - Application à la gestion des déchets », 2008, Éditions Le Moniteur, ISBN 978-2-281-11376-1
**[2]** WO-A-2007/135178
**[3]** GB-B-834,531
**[4]** EP-A-0 251 399

## Revendications

1. Procédé pour désextraire de l'uranium(VI) et un actinide(IV) d'une solution organique dans laquelle l'uranium(VI) et l'actinide(IV) sont présents sous la forme de nitrates à des concentrations telles que la concentration du nitrate d'uranium(VI) est plus élevée que la concentration du nitrate d'actinide(IV), et la somme des concentrations des nitrates d'uranium(VI) et d'actinide(IV) est supérieure ou égale à 55 g/L, la solution organique comprenant du phosphate de tri-n-butyle dans un diluant organique, lequel procédé comprend :
- au moins une mise en contact de la solution organique avec une solution aqueuse comprenant de 2 mol/L à 6 mol/L d'acide nitrique et de l'acide oxalique à une concentration supérieure ou égale à 18 g/L dans un rapport volumique solution organique/solution aqueuse supérieur ou égal à 1, la concentration de l'acide oxalique dans la solution aqueuse et le rapport volumique solution organique/solution aqueuse étant choisis de sorte que l'acide oxalique soit en défaut par rapport aux conditions stœchiométriques d'une précipitation complète de l'uranium(VI) et de l'actinide(IV), moyennant quoi on obtient un précipité qui comprend l'actinide(IV) sous forme d'oxalate et de l'uranium(VI) sous forme d'oxalate dans un rapport massique U(VI)/actinide(IV) compris entre 0,5 et 5 ; puis
- une séparation du précipité des solutions organique et aqueuse.

2. Procédé selon la revendication 1, dans lequel la solution organique comprend de 25 % à 35 % (v/v) de phosphate de tri-*n*-butyle.

3. Procédé selon la revendication 2, dans lequel la solution organique comprend 30% (v/v) de phosphate de tri-*n*-butyle.

4. Procédé selon l'une quelconque des revendications 1 à 3, dans lequel la concentration de l'acide oxalique dans la solution aqueuse est supérieure ou égale à 20 g/L.

5. Procédé selon la revendication 4, dans lequel la concentration de l'acide oxalique dans la solution aqueuse est supérieure ou égale à 22 g/L.

6. Procédé selon l'une quelconque des revendications 1 à 5, dans lequel le rapport volumique solution organique/solution aqueuse est supérieur ou égal à 1,5.

7. Procédé selon l'une quelconque des revendications 1 à 6, qui comprend de plus un ou plusieurs lavages du précipité avec une solution aqueuse comprenant de l'acide nitrique ou avec une solution organique comprenant le diluant organique, chaque lavage étant suivi d'une séparation du précipité de la solution aqueuse ou organique de lavage.

8. Procédé selon l'une quelconque des revendications 1 à 7, dans lequel l'actinide(IV) est le plutonium(IV) ou le thorium(IV).

9. Procédé selon la revendication 8, dans lequel l'actinide(IV) est le plutonium(IV).

10. Procédé de traitement d'une solution aqueuse issue de la dissolution d'un combustible nucléaire usé dans de l'acide nitrique, la solution aqueuse comprenant au moins de l'uranium(VI) et un actinide(IV), lequel procédé comprend aux moins les étapes suivantes :
a) une co-extraction de l'uranium(VI) et de l'actinide(IV) de la solution aqueuse, la co-extraction comprenant au moins une mise en contact de la solution aqueuse avec une solution organique comprenant du phosphate de tri-*n*-butyle en solution dans un diluant organique, puis une séparation de la solution aqueuse de la solution organique ;
b) une désextraction de l'actinide(IV) et d'une fraction de l'uranium(VI) de la solution organique obtenue à l'issue de l'étape a), la désextraction comprenant une mise en œuvre d'un procédé selon l'une quelconque des revendications 1 à 9 ; et
c) une désextraction de l'uranium(VI) n'ayant pas été désextrait à l'étape b) de la solution organique, la désextraction comprenant au moins une mise en contact de la solution organique avec une solution aqueuse comprenant de 0,005 mol/L à 0,05 mol/L d'acide nitrique, puis une séparation de la solution organique de la solution aqueuse.

11. Procédé de traitement selon la revendication 10, qui comprend de plus, entre les étapes a) et b), un lavage de la solution organique obtenue à l'issue de l'étape a), le lavage comprenant au moins une mise en contact de la solution organique obtenue à l'issue de l'étape a) avec une solution aqueuse comprenant de 0,5 mol/L à 6 mol/L, de préférence de 4 mol/L à 6 mol/L, d'acide nitrique, puis une séparation de la solution organique de la solution aqueuse.

12. Procédé de traitement selon la revendication 10 ou la revendication 11, qui comprend de plus une régénération de la solution organique obtenue à l'issue de l'étape c) pour sa réutilisation à l'étape a).

13. Procédé selon l'une quelconque des revendications 10 à 12, qui comprend de plus une conversion du précipité obtenu à l'issue de l'étape b) en un oxyde mixte d'uranium(VI) et d'actinide(IV).

14. Procédé selon l'une quelconque des revendications 10 à 13, dans lequel l'actinide(IV) est le plutonium(IV).

## Patentansprüche

1. Verfahren zur Desextraktion von Uran(VI) und einem Aktinid(IV) aus einer organischen Lösung, in der das Uran(VI) und das Aktinid(IV) in Form von Nitraten in solchen Konzentrationen vorliegen, dass die Konzentration des Uran(VI)-Nitrats höher ist als die Konzentration des Aktinid(IV)-Nitrats, und die Summe der Konzentrationen von Uran(VI)- und Aktinid(IV)-Nitrat größer oder gleich 55 g/L ist, wobei die organische Lösung Tri-n-Butylphosphat in einem organischen Verdünnungsmittel umfasst, wobei das Verfahren Folgendes umfasst:
- mindestens ein Inkontaktbringen der organischen Lösung mit einer wässrigen Lösung von 2 mol/L bis 6 mol/L Salpetersäure und Oxalsäure in einer Konzentration von mindestens 18 g/L in einem Volumenverhältnis organische Lösung/wässrige Lösung von 1 oder mehr, die Konzentration der Oxalsäure in der wässrigen Lösung und das Volumenverhältnis organische Lösung/wässrige Lösung so gewählt werden, dass die Oxalsäure den stöchiometrischen Bedingungen einer vollständigen Ausfällung von Uran(VI) und Aktinid(IV) nicht entspricht, wodurch man ein Präzipitat erhält, das Aktinid(IV) in Form von Oxalat und Uran(VI) als Oxalat im Massenverhältnis U(VI)/Aktinid(IV) zwischen 0,5 und 5 enthält; dann
- ein Abtrennen des Präzipitats von organischen und wässrigen Lösungen.

2. Verfahren nach Anspruch 1, wobei die organische Lösung 25% bis 35% (v/v) Tri-n-Butylphosphat umfasst.

3. Verfahren nach Anspruch 2, wobei die organische Lösung 30% (v/v) Tri-n-Butylphosphat umfasst.

4. Verfahren nach einem der Ansprüche 1 bis 3, wobei die Konzentration der Oxalsäure in der wässrigen Lösung größer oder gleich 20 g/L ist.

5. Verfahren nach Anspruch 4, wobei die Konzentration der Oxalsäure in der wässrigen Lösung größer oder gleich 22 g/L ist.

6. Verfahren nach einem der Ansprüche 1 bis 5, wobei das Volumenverhältnis organische Lösung/wässrige Lösung größer oder gleich 1,5 ist.

7. Verfahren nach einem der Ansprüche 1 bis 6, das ferner eine oder mehrere Waschungen des Ausfällungsmaterials mit einer wässrigen Lösung, die Salpetersäure umfasst, oder mit einer organischen Lösung, die das organische Verdünnungsmittel umfasst, umfasst, wobei auf jede Waschung ein Abtrennen des Ausfällungsmaterials von der wässrigen oder organischen Waschlösung folgt.

8. Verfahren nach einem der Ansprüche 1 bis 7, wobei das Aktinid(IV) Plutonium(IV) oder Thorium(IV) ist.

9. Verfahren nach Anspruch 8, wobei das Aktinid(IV) Plutonium(IV) ist.

10. Verfahren zur Behandlung einer wässrigen Lösung aus der Auflösung eines verbrauchten Kernbrennstoffs in Salpetersäure, wobei die wässrige Lösung mindestens Uran(VI) und ein Aktinid(IV) umfasst, wobei das Verfahren mindestens folgende Schritte umfasst:
a) eine Koextraktion des Urans(VI) und des Aktinids(IV) der wässrigen Lösung, wobei die Koextraktion mindestens ein Inkontaktbringen der wässrigen Lösung mit einer organischen Lösung umfasst, die Tri-n-Butylphosphat als Lösung in einem organischen Verdünnungsmittel umfasst, und anschließend ein Abtrennen der wässrigen Lösung von der organischen Lösung;
b) eine Desextraktion des Aktinids(IV) und einer Uranfraktion(VI) der aus Schritt a) gewonnenen organischen Lösung, wobei die Desextraktion die Durchführung eines Verfahrens nach einem der Ansprüche 1 bis 9 umfasst; und
c) eine Desextraktion von Uran(VI), das nicht in Schritt b) aus der organischen Lösung deextrahiert wurde, wobei die Desextraktion mindestens ein Inkontaktbringen der organischen Lösung mit einer wässrigen Lösung, die 0,005 mol/L bis 0,05 mol/L Salpetersäure enthält, und dann ein Abtrennen der organischen Lösung von der wässrigen Lösung umfasst.

11. Verfahren zur Behandlung nach Anspruch 10, das ferner zwischen den Schritten a) und b) ein Waschen der nach Schritt a) erhaltenen organischen Lösung umfasst, das Waschen umfassend mindestens ein Inkontaktbringen der nach Schritt a) erhaltenen organischen Lösung mit einer wässrigen Lösung von 0,5 mol/L bis 6 mol/L, vorzugsweise 4 mol/L bis 6 mol/L, Salpetersäure und anschließendes Abtrennen der organischen Lösung von der wässrigen Lösung.

12. Verfahren zur Behandlung nach Anspruch 10 oder Anspruch 11, das ferner eine Regeneration der nach Schritt c) erhaltenen organischen Lösung zur Wiederverwendung in Schritt a) umfasst.

13. Verfahren nach einem der Ansprüche 10 bis 12, das ferner eine Umwandlung des aus Schritt b) gewonnenen Präzipitats in ein gemischtes Uranoxid(VI) und Aktinid(IV) umfasst.

14. Verfahren nach einem der Ansprüche 10 bis 13, wobei das Aktinid(IV) Plutonium(IV) ist.

## Claims

1. A method for stripping uranium(VI) and an actinide(IV) from an organic solution in which the uranium(VI) and the actinide(IV) are present as uranium(VI) nitrate and actinide(IV) nitrate at concentrations such that a uranium(VI) nitrate concentration is higher than an actinide(IV) nitrate concentration, and a sum of the uranium(VI) nitrate concentration and the actinide(IV) nitrate concentration is greater than or equal to 55 g/L, the organic solution comprising tri-n-butyl phosphate in an organic diluent, the method comprising:
- at least one contact between the organic solution and an aqueous solution comprising from 2 mol/L to 6 mol/L of nitric acid, and oxalic acid at a concentration greater than or equal to 18 g/L, with an organic solution/aqueous solution volume ratio greater than or equal to 1, the oxalic acid concentration in the aqueous solution and the organic solution/aqueous solution volume ratio being selected so that the oxalic acid is deficient with respect to the stoichiometric conditions of a complete precipitation of uranium(VI) and actinide(IV), whereby a precipitate is obtained comprising the actinide(IV) in oxalate form and a fraction of the uranium(VI) in oxalate form with a U(VI)/actinide(IV) mass ratio of between 0.5 and 5; then
a separation of the precipitate from the organic and aqueous solutions.

2. The method of claim 1, wherein the organic solution comprises from 25% to 35% (v/v) of tri-*n*-butyl phosphate.

3. The method of claim 2, wherein the organic solution comprises 30 % (v/v) of tri-*n*-butyl phosphate.

4. The method of claim 1, wherein the oxalic acid concentration in the aqueous solution is greater than or equal to 20 g/L.

5. The method of claim 4, wherein the oxalic acid concentration in the aqueous solution is greater than or equal to 22 g/L.

6. The method of any one of claims 1 to 5, wherein the organic solution/aqueous solution volume ratio is greater than or equal to 1.5.

7. The method of any one of claims 1 to 6, further comprising one or more washings of the precipitate with an aqueous solution comprising nitric acid or with an organic solution comprising the organic diluent, each washing being followed by a separation of the precipitate from the washing aqueous or organic solution.

8. The method of any one of claims 1 to 7, wherein the actinide(IV) is plutonium(IV) or thorium(IV).

9. The method of claim 8, wherein the actinide(IV) is plutonium(IV).

10. A method for processing an aqueous solution issued from a dissolution of a spent nuclear fuel in nitric acid, the aqueous solution comprising at least uranium(VI) and an actinide(IV), the method comprising at least the steps of:
a) co-extracting the uranium(VI) and actinide(IV) from the aqueous solution, the co-extracting comprising at least one contact between the aqueous solution and an organic solution comprising tri-*n*-butyl phosphate in an organic diluent, and then a separation of the aqueous solution from the organic solution, whereby the uranium(VI) and the actinide(IV) are present in the organic solution issued from step a) as uranium(VI) nitrate and actinide(IV) nitrate at concentrations such that a uranium(VI) nitrate concentration is higher than an actinide(IV) nitrate concentration, and a sum of the uranium(VI) nitrate concentration and the actinide(IV) nitrate concentration is greater than or equal to 55 g/L;
b) stripping the actinide(IV) and a fraction of the uranium(VI) from the organic solution issued from step a), the stripping comprising the implementation of the method according to any one of claims 1 to 9; and
c) stripping the uranium(VI) that was not stripped in step b) from the organic solution, the stripping comprising at least one contact between the organic solution and an aqueous solution comprising from 0.005 mol/L to 0.05 mol/L of nitric acid, and then a separation of the organic solution from the aqueous solution.

11. The method of claim 10, further comprising, between steps a) and b), a washing of the organic solution issued from step a), the washing comprising at least one contact between the organic solution issued from step a) and an aqueous solution comprising from 0.5 mol/L to 6 mol/L, preferably 4 mol/L to 6 mol/L of nitric acid, and then a separation of the organic solution from the aqueous solution.

12. The method of claim 10 or claim 11, further comprising a regeneration of the organic solution issued from step c) for reuse thereof in step a).

13. The method of any one of claims 10 to 12, further comprising a conversion of the precipitate issued from step b) into a mixed uranium(VI) and actinide(IV) oxide.

14. The method of any one of claims 10 to 13, wherein the actinide(IV) is plutonium(IV).
